# EUROPÄISCHE PATENTSCHRIFT

(11) **EP 1 185 910 B1**
(45) Veröffentlichungstag und Bekanntmachung des Hinweises auf die Patenterteilung: **06.08.2003**
(21) Anmeldenummer: 00938694.7
(22) Anmeldetag: 27.05.2000
(51) Int. Cl.: G05B 19/418, G05B 15/00

(54) **VERFAHREN ZUM SYNCHRONISIERTEN HOCHLAUF EINER NUMERISCHEN STEUERUNG**
METHOD FOR THE SYNCHRONIZED RUN-UP OF A NUMERICAL CONTROL
PROCEDE DE LANCEMENT SYNCHRONISE D'UNE COMMANDE NUMERIQUE

(30) Priorität: 28.05.1999 DE 19924461
(43) Veröffentlichungstag der Anmeldung: 13.03.2002
(73) Patentinhaber: Dr. Johannes Heidenhain GmbH, 83292 Traunreut (DE)
(72) Erfinder: RUTKOWSKI, Christian, D-83278 Traunstein (DE); KLUGHAMMER, Thomas, D-83339 Chieming (DE)
(86) Internationale Anmeldenummer: EP0004856
(87) Internationale Veröffentlichungsnummer: WO00073864

(56) Entgegenhaltungen:
- EP-A- 0 546 794
- DE-A- 19 520 744
- DE-A- 19 520 745
- DE-A- 19 520 747

## Beschreibung

Die Erfindung betrifft ein Verfahren zum synchronisierten Hochlauf einer numerischen Steuerung nach dem Oberbegriff des Anspruchs 1.

Die EP 0 524 344 B1 offenbart eine konfigurierbare Werkzeugmaschinensteuerung, die aus mehreren aufgabenorientierten Einheiten besteht, beispielsweise einem numerischen und einem speicherprogrammierbaren Steuerteil, einer Bedienereinheit und einem Kommunikationsbereich mit Netzwerkschnittstelle. Weiterhin ist mindestens ein in Soft- oder in Soft- und Hardware realisiertes Funktionsobjekt, das eine Funktion durchführen kann vorgesehen. Dieses Funktionsobjekt untergliedert sich in einen Prozedurteil, einen Kommunikationsteil und evtl. einen Bedienteil. Zusätzlich ist mindestens ein Objektmanager vorhanden, der mindestens zwei Funktionsobjekte verwaltet, insbesondere deren Nachrichtenaustausch synchronisiert. Diese Steuerungsstruktur wird auf mindestens einer Datenverarbeitungsanlage realisiert, welche die Daten der Funktionsobjekte und Objektmanager bearbeitet und selbst als aufgabenorientierte Einheit ausgebildet ist.

Aus der EP 0 524 344 B1 ist kein systematisches Verfahren zum Starten einer objektorientiert realisierten Steuerung bekannt.

Aus der EP 0 657 043 B1 ist eine objektorientierte Steuerung für Werkzeugmaschinen bekannt, bei der aus Objektklassen eine Reihe von Objekten gebildet werden. Ausgehend von der in der EP 0 524 344 B1 offenbarten Struktur einer Steuerung werden in der EP 0 657 043 B1 die konkret erforderlichen Objektklassen und Objekte offenbart, die erforderlich sind, um eine herkömmliche Funktionalität einer Steuerung zu realisieren. Dazu gehören beispielsweise Objektklassen für Bearbeitungs-, Geometrie, Kinematik- und Technologiedatentypen ebenso wie Steuerdatentypen und eine Objektklasse Ablaufsteuerung. Von jeder Objektklasse kann eine beliebige Anzahl Objekte gebildet werden, die jeweils einen eigenen Datenbereich, einen Botschaftenmechanismus zur Kommunikation mit anderen Objekten und einen Prozedurteil zur Ausführung von Methoden zur Bearbeitung, Kinematik, Geometrie oder Technologie beinhalten. Durch die Ablaufsteuerung werden die Benutzereingaben interpretiert und führen zur Aktivierung der ausgewählten Objekte. Die ausgewählten Objekte kommunizieren untereinander und bilden durch diese netzwerkartige Verknüpfung eine ablauffähige Funktionseinheit der Steuerung.

Auch aus der EP 0 657 043 B1 ist kein systematisches Verfahren zum Starten einer numerischen Steuerung bekannt.

Aus der EP 0 717 866 B1 ist ein CNC-Steuerungssystem bekannt, das ein objektorientiertes Programm beinhallet, in welchem Objekte objektorientierte Nachrichten austauschen Im objektorientrerten Programm sind die Objekte in Klassen unterteilt, beispielsweise eine Prozessklasse, die Objekte für Bearbeitungsprozesse wie Bohren. Gewindeschneiden, Räumen usw. beinhaltet, die durch Maschinenkomponenten ausgefuhrt werden. Dabei beinhaltet eine Klasse immer ähnliche Objekte, das heißt Objekte, die in ihrer Grundstruktur übereinstimmen Aufgrund der einheitlichen Grundstruktur der Objekte einer Klasse besteht die Möglichkeit, dass beim Erstellen neuer Objekte ausgewählte Eigenschaften der jeweiligen Klasse an das neue Objekt vererbt werden. Beispielsweise weist ein Bohr-Objekt eine Tiefe und einen Durchmesser auf, die von einem anderen Objekt der Prozessklasse geerbt werden können, beispielsweise einem Gewindeschneid-Objekt, das ebenfalls eine Tiefe und einen Durchmesser aufweist. Eine weitere Objektklasse weist Maschinenkomponenten, wie beispielsweise eine Spindel, Achsen, einen Drehtisch usw., auf. Weiterhin sind Objektklassen für das Kernel mit einem Motion und einem Logic Controller als Objekte, für Plattform Services, das Operating System und die Device Driver vorgesehen. Im Betrieb der Steuerung ist es erforderlich, dass Nachrichten zwischen den einzelnen Objekten ausgetauscht werden. Für einen Bohrvorgang wird beispielsweise vom Bohr-Objekt eine Nachricht die Drehzahl des Bohrers betreffend an das Objekt Spindel übertragen, weiterhin werden Nachrichten die Position des Loches betreffend an die Objekte der beteiligten Achsen übertragen usw., Dabei ist ein Standard-Interface für die Nachrichten vorgesehen, damit diese einen universellen Aufbau aufweisen und unabhängig von den beteiligten Objekten ausgestaltet werden können. Diese Standard-Schnittstelle zum Nachrichtenaustausch zwischen Objekten wird bei einem Objekt, das Nachrichten bezüglich der Bewegung empfängt oder sendet durch einen Softwarekern realisiert, der in Echtzeit arbeiten soll und Nachrichten empfängt und sendet.

Ein Verfahren für einen synchronisierten Hochlauf einer numerischen Steuerung wird dabei nicht offenbart.

In der DE 195 20 747 A1 ist ein System aus mehreren Objektmanager-Komponenten beschrieben, auf denen lokal Objektmanager installiert sind, die durch mehrere Phasen zu initialisieren sind. Die Initialisierung erfolgt durch mehrere Schritte, wobei ein neuer Schritt erst gestartet wird, wenn der vorhergehende Schritt ausgeführt ist.

Ein Verfahren für einen synchronisierten Hochlauf einer numerischen Steuerung mit hierarchisch gegliederten Objekten wird dabei nicht offenbart.

Aufgabe der vorliegenden Erfindung ist es daher, ein Verfahren für einen Start einer Applikation einer numerischen Steuerung anzugeben, bei dem synchronisiert deren Prozesse, Threads und Module in eine Struktur eingebunden und initialisiert werden und bei dem anschließend in den Norrnalbetrieb übergegangen wird. Es soll sichergestellt werden, dass beim Übergang in den Normalbetrieb insbesondere die Kommunikationskanäle vorhanden sind, über die Module miteinander kommunizieren, die zu unterschiedlichen Threads oder Prozessen gehören.

Diese Aufgabe wird durch ein Verfahren mit den im Anspruch 1 angegebenen Merkmalen gelöst.

Weiterbildungen und vorteilhafte Ausgestaltungen des erfindungsgemäßen Verfahrens sind den abhängigen Ansprüchen zu entnehmen.

Das erfindungsgemäße Verfahren weist den Vorteil auf, dass die Software einer numerischen Steuerung für eine Werkzeugmaschine in Form einer Applikation mit den zugehörigen Prozessen, Threads und Modulen bis zur Betriebsbereitschaft der Steuerung synchronisiert gestartet wird. Dabei wird in einem ersten Initialisierungsschritt die Applikation in Form einer oder mehrerer ausführbarer Dateien in den Arbeitsspeicher geladen und es werden die einzelnen Objekte, wie beispielsweise Prozesse, Threads und Module erzeugt. Sobald alle Objekte erzeugt wurden, werden in einem zweiten Initialisierungsschritt die Objekte initialisiert, beispielsweise mit Parameterwerten. Sobald dieser Initialisierungsschritt abgeschlossen ist, können weitere Initialisierungsschritte folgen, bis in einem letzten Initialisierungsschritt die gesamte Applikation für den Betrieb freigegeben wird. Somit sind bei einem fehlerfreien Hochlauf alle Applikationen, Prozesse, Threads und Module erzeugt, initialisiert und die Steuerung ist betriebsbereit. Sollten Fehler in einem Objekt auftreten, ist nach einem derartigen synchronisierten Hochlauf bekannt, welche Prozesse, Threads oder Module fehlerhaft sind. Ein weiterer Vorteil besteht darin, dass dem Anwender gemeldet wird, falls dies für eine benötigte Applikation, einen Prozess, einen Thread oder ein Modul nicht der Fall sein sollte.

Die Erfindung wird im folgenden anhand von Zeichnungen näher erläutert. Es zeigt:
- Figur 1:: eine mögliche schaltungstechnische Realisierungsform einer erfindungsgemäßen Steuerung,
- Figur 2:: eine mögliche Struktur einer Applikation.

Die Erfindung soll im folgenden anhand einer einfachen numerischen Steuerung für eine Werkzeugmaschine erläutert werden.

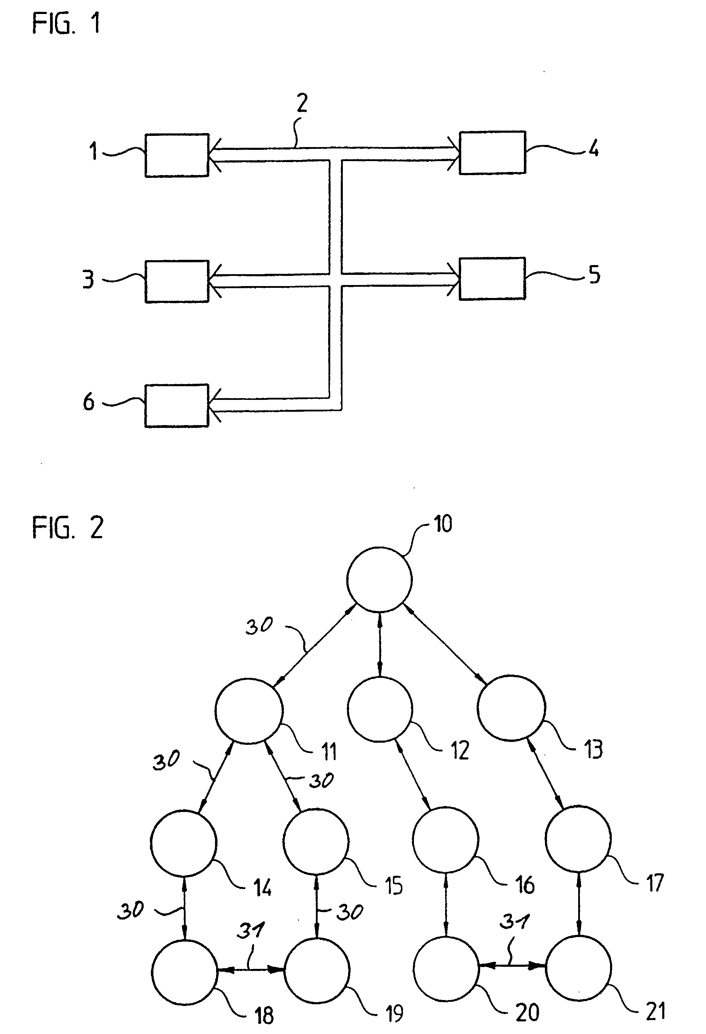

Die Steuerungsanordnung weist gemäß Figur 1 mindestens einen Massenspeicher 1 auf, der über einen bidirektionalen Bus 2 mit einem Prozessor 3 verbunden ist. Dadurch kann der Prozessor 3 schreibend und lesend auf den Massenspeicher 1 zugreifen. Der Massenspeicher 1 kann durch einen magnetischen oder optischen Speicher oder eine Kombination mehrerer unterschiedlicher Speicher realisiert werden. Weiterhin kann der Massenspeicher 1 auswechselbare Speichermedien, wie beispielsweise Compakt Disks, aufweisen. Über den Bus 2 besteht auch eine bidirektionale Verbindung mit einem Arbeitsspeicher 4, der als Schreib-/Lesespeicher ausgestaltet ist und eine kürzere Zugriffszeit als der Massenspeicher 1 aufweist. Der Arbeitsspeicher 4 kann - zumindest teilweise - auch in den Prozessor 3 integriert ausgeführt sein. Über den Bus 2 besteht weiterhin eine bidirektionale Verbindung zu einem Festwertspeicher 5, der im Unterschied zum Arbeitsspeicher 4 nur eine kleine Speicherkapazität aufweist und als Lese-Speicher ausgestaltet ist. An den Bus ist außerdem eine Reglerbaugruppe 6 angeschlossen, mit der wiederum die Antriebsmotoren für die Achsen und die Spindel verbunden sind.

Damit der Prozessor 3 der Steuerungsanordnung die verschiedenen Funktionen der Werkzeugmaschine steuern kann, muss die Software einer numerischen Steuerung für die Werkzeugmaschine, die im folgenden mit Applikation 10 bezeichnet und vom Prozessor 3 abgearbeitet wird, im Arbeitsspeicher 4 bereitgestellt werden. Da der Arbeitsspeicher 4 in der Regel kein permanenter Speicher ist, wird auf dem Massenspeicher 1 eine ausführbare Datei gespeichert, die ein Erzeugen der gesamten Applikation 10 im Arbeitsspeicher 4 durch den Prozessor 3 ermöglicht, sobald die Steuerungsanordnung mit der Versorgungsspannung verbunden wird. Die Erzeugung der Applikation 10 aus der im Massenspeicher 1 gespeicherten Datei wird im folgenden als Initialisierung bezeichnet, die meist in mehreren Schritten erfolgt.

Zunächst wird ein Startprogramm ausgeführt, das Informationen über die Applikation 10 und über die zeitliche Reihenfolge der einzelnen Initialisierungsschritte beinhaltet und das zumindest einen Teil der Daten der Applikation 10 von dem Massenspeicher 1 in den Arbeitsspeicher 4 lädt. Zu Beginn der Initialisierung wird die Struktur der Applikation 10 erzeugt. Dabei werden die Daten der mindestens einen auf dem Massenspeicher 1 gespeicherten und zur Applikation 10 gehörenden ausführbaren Datei in den Arbeitsspeicher 4 übertragen und abgearbeitet. Bei der Abarbeitung werden miteinander verknüpfte Objekte 11 bis 21 erzeugt.

Eine Applikation 10 wird gemäß Figur 2 in mehrere Prozesse 11 bis 13 untergliedert, wobei vorteilhaft jeder Prozess 11 bis 13 einen eigenen Adressraum im Arbeitsspeicher 4 besitzt. Es können sich aber auch mehrere oder alle Prozesse 11 bis 13 einen gemeinsamen Adressraum teilen. Jeder Prozess 11 bis 13 wird in Threads 14, 15; 16; 17 untergliedert und weist mindestens einen Thread 14, 15; 16; 17 auf. Der innerhalb eines Threads 14 bis 17 abgearbeitete Code ist in Module 18 bis 21 unterteilt, zu denen je eine definierte Datenstruktur gehört und in denen je mindestens eine konkrete Funktion der Steuerung realisiert ist, z.B. eine Tasche fräsen oder ein Gewinde schneiden usw.. Die zur Applikation 10 gehörenden Module 18 bis 21, Threads 14 bis 17 und Prozesse 11 bis 13 sind derart miteinander verknüpft, dass sie auch über die Grenzen von Threads 14 bis 17 und Prozessen 11 bis 13 hinweg Daten austauschen können.

Wie bereits erläutert, wird die Software der numerischen Steuerung der Werkzeugmaschine Applikation 10 genannt, sie hat die Funktion der Maschinensteuerung oder die Funktion eines Programmierplatzes. Die der Applikation 10 untergeordneten Prozesse 11 bis 13 haben beispielsweise die Funktion der Interpolation, der Speicherprogrammierbaren Steuerung SPS oder der Geometrie-Vorausberechnung. Die den Prozessen 11 bis 13 untergeordneten Threads 14 bis 17 haben die Funktion den Prozessen 11 bis 13 CPU-Zeit zur Verfügung zu stellen, also die CPU-Zeit aufzuteilen. Für eine Applikation 10 benötigt man nämlich CPU-Zeit und Daten, die Daten werden in Form von Speicherplatz vom Prozess 11 bis 13 und die CPU-Zeit vom zugeordneten Thread 14 bis 17 zur Verfügung gestellt. Die den Threads 14 bis 17 untergeordneten Module 18 bis 21 teilen einen Prozess 11 aus logischer Sicht in logische Abschnitte auf, wie beispielsweise Koordinatentransformation.

Um eine derartige Struktur der Applikation 10 besonders einfach programmtechnisch zu realisieren, wird vorteilhaft eine objektorientierte Programmiersprache gewählt. Mittels der objektorientierten Programmiersprache wird die Applikation 10, jeder Prozess 11 bis 13, jeder Thread 14 bis 17 und jedes Modul 18 bis 21 als ein Objekt ausgestaltet. Die Objekte 10 bis 21 können synchronisiert werden, weitere Objekte 11 bis 21 erzeugen und die erzeugten Objekte 11 bis 21 verwalten. Eine derartige Struktur und die genannten Funktionen können prinzipiell auch durch eine nicht objektorientierte Programmiersprache realisiert werden.

Wird die Steuerungsanordnung mit der Versorgungsspannung verbunden, wird zunächst deren Betriebssystem-Software in den Arbeitsspeicher 4 der Steuerungsanordnung geladen und anschließend das Startprogramm der Applikation 10. Dieses Startprogramm wird anschließend ausgeführt und steuert die synchronisierte Erzeugung zumindest der weiteren Prozesse 11 bis 13. Alternativ kann durch das Startprogramm auch die Erzeugung der gesamten Struktur 10 bis 21 gesteuert werden.

Die vom Startprogramm benötigten Daten sind in einer separaten, einzulesenden Datei oder unmittelbar im Startprogramm selbst gespeichert. Falls diese Daten in einer separaten Datei gespeichert sind, lädt das Startprogramm auch diese Datei in den Arbeitsspeicher 4 und wertet sie aus. Die Daten bezeichnen mindestens eine auf dem Massenspeicher 1 gespeicherte, zu ladende ausführbare Datei, für einen Prozess 11 bis 13, der Applikation 10 und optional Übergabeparameter der Prozesse 11 bis 13, Informationen zur Synchronisation der Prozesse 11 bis 13 und Informationen über die bei der Initialisierung durchzuführenden Initialisierungs-Schritte. Diese derart definierten ausführbaren Dateien werden durch das Startprogramm in den Arbeitsspeicher 4 der Steuerung geladen und ausgewertet. Anschließend können die Prozesse 11 bis 13 erzeugt werden.

Beim Abarbeiten des Startprogramms für den synchronisierten Hochlauf der Steuerung werden also nacheinander für die Applikation 10 die benötigten Dateien in den Arbeitsspeicher 4 geladen. Danach werden die Prozesse 11 bis 13, die die Applikation 10 bilden, erzeugt, anschließend die Threads 14 bis 17 und letztendlich die zu den Modulen 18 bis 21 gehörenden Datenstrukturen. Dabei werden für die Erzeugung der zu jedem Prozess 11 bis 13 gehörenden Threads 14 bis 17 und der zu jedem Thread 14 bis 17 gehörenden Module 18 bis 21 weitere Daten benötigt. Die Daten zur Erzeugung der Threads 14 bis 17 können im Startprogramm, bzw. einer vom Startprogramm eingelesenen Datei, in einer ausführbaren Datei des Prozesses 11 bis 13 oder in einer jeweils eingelesenen Datei gespeichert sein.

Sinngemäß gilt das auch für die Module 18 bis 21. Auch hier können die für die Erzeugung benötigten Daten bereits im Startprogramm, bzw. in einer vom Startprogramm geladenen Datei, oder in einer ausführbaren Datei oder einer eigenen Datei gespeichert sein. Der zum jeweiligen Modul 18 bis 21 gehörende Thread 14 bis 17 erzeugt aufgrund der Daten über ein Modul 18 bis 21 dieses Modul 18 bis 21.

Dadurch entsteht eine baumartige Struktur der Objekte 10 bis 21, an deren Spitze die Applikation 10 auf der höchsten Hierarchie-Ebene steht. Die Applikation 10 untergliedert sich in Prozesse 11 bis 13, welche wiederum aus Threads 14 bis 17 bestehen. Auf der untersten Hierarchie-Ebene stehen die Module 18 bis 21, die den Threads 14 bis 17 zugeordnet sind.

Die Verknüpfung zwischen den Modulen 18 bis 21, Threads 14 bis 17 und Prozessen 11 bis 13 bis hin zur Applikation 10 wird durch Kommunikationskanäle 30 realisiert. Da die Module jeweils eine bestimmte Funktionalität aufweisen, werden für jedes Modul 18 bis 21 definierte Kommunikationskanäle 31 benötigt, über die Daten von oder zu einem anderen Modul 18 bis 21 übertragen werden.

In einer erfindungsgemäßen Ausgestaltung weist jedes Objekt 10 bis 21 unter anderem einen Programmteil auf, der der Initialisierung dieses Objekts 10 bis 21 dient und für jedes Objekt 10 bis 21 individuelle Maßnahmen zu dessen Initialisierung ausführt. Diese individuellen Maßnahmen bestehen zumindest darin, dass das Objekt 10 bis 21 bei den ihm hierarchisch untergeordneten Objekten 11 bis 21 die Initialisierung veranlasst, auf die Ausführungsmeldungen aller untergeordneter Objekte 11 bis 21 wartet und dann an das übergeordnete Objekt 10 bis 17. nach eigener korrekter Initialisierung, eine Ausführungsmeldung weiterleitet Zusätzlich können durch den Programmteil zur Initialisierung weitere Initialisierungsmaßnahmen erfolgen.

Mittels einer objektorientierten Programmiersprache kann diese Zuordnung von Programmteilen besonders vorteilhaft realisiert werden.

Sobald ein Modul 18 bis 21 korrekt erzeugt wurde und sich in die objektorientierte Struktur eingefügt hat. sendet das Modul 18 bis 21 an das ihm hierarchisch übergeordnete Thread 14 bis 17, das das Modul 18 bis 21 erzeugt hat, eine Ausführungsmeldung zuruck Daran erkennt das Thread 14 bis 17, dass das Modul 18 bis 21 fehlerfrei erzeugt wurde. Sobald das Thread 14 bis 17 von jedem von ihm erzeugten Modul 18 bis 21 die Ausführungsmeldung erhalten hat und das Thread 14 bis 17 auch selbst korrekt erzeugt wurde, sendet es an den ihm übergeordneten Prozess 11 bis 13 ebenfalls eine Ausführungsmeldung. Sobald wiederum jeder Prozess 11 bis 13 von allen von ihm erzeugten Threads 14 bis 17 eine Ausführungsmeldung zur korrekten Erzeugung empfangen hat und der Prozess 11 bis 13 auch selbst korrekt erzeugt wurde, sendet der Prozess 11 bis 13 eine Ausführungsmeldung an die übergeordnete Applikation 10. Im dargestellten Beispiel ist jedem Thread 14 bis 17 jeweils nur ein Modul 18 bis 21 zugeordnet, es können einem Thread 14 bis 17 aber auch mehrere Module zugeordnet sein.

Sobald die Applikation 10 von allen von ihm erzeugten Prozessen 11 bis 13 aufgrund der empfangenen Ausführungsmeldungen eine korrekte Erzeugung erkannt hat, erfolgt der nächste Schritt der Initialisierung. Bis dahin müssen alle bereits erzeugten Objekte 11 bis 21 warten, damit keine Überschneidungen bei der Initialisierung auftreten, beispielsweise dass ein erstes Objekt mit einem zweiten Objekt kommunizieren will, obwohl das zweite Objekt noch nicht erzeugt wurde. Durch dieses Warten wird die Synchronisation der Initialisierung erreicht, da alle Objekte 11 bis 21 zu einem definierten Zeitpunkt einen definierten Zustand aufweisen. In einem typischen Multitasking Betriebssystem stehen zur Realisierung dieses Wartens bzw. dieser Synchronisation Mechanismen wie Semaphoren und Barrieren o.ä. zur Verfügung.

In einem zweiten Schritt der Initialisierung werden die Kommunikationskanäle 30, 31 zwischen den Objekten 10 bis 21 eingerichtet. Indem die Ausführung des im jeweiligen Prozess 11 bis 13 zur Initialisierung der Kommunikationskanäle 30 vorgesehenen Programmteils veranlasst wird, werden die Kommunikationskanäle 30 eines Prozesses 11 bis 13 eingerichtet. Dies setzt sich entsprechend der bei der Erzeugung der Struktur bereits beschriebenen Vorgehensweise auch für Threads 14 bis 17 und Module 18 bis 21 fort, bis alle Module 18 bis 21 ihre Kommunikationskanäle 30, 31 erzeugt haben.

Nach erfolgreicher Erzeugung aller Kommunikationskanäle 30, 31 durch ein Modul 18 bis 21 sendet dieses eine Ausführungsmeldung an den veranlassenden Thread 14 bis 17 zurück. Sobald ein Thread 14 bis 17 von allen zugeordneten Modulen 18 bis 21 die Ausführungsmeldung erhalten hat und auch selbst alle Kommunikationskanäle 30 erfolgreich erzeugt hat, sendet der Thread 14 bis 17 ebenfalls eine Ausführungsmeldung an den übergeordneten Prozess 11 bis 13. Hat ein Prozess 11 bis 13 von allen zugeordneten Threads 14 bis 17 eine Ausführungsmeldung empfangen, und auch selbst alle Kommunikationskanäle 30 korrekt erzeugt, sendet es eine Ausführungsmeldung an die übergeordnete Applikation 10. Sobald die Applikation 10 von allen zugeordneten Prozessen 11 bis 13 eine Ausführungsmeldung erhalten hat, ist auch dieser zweite Schritt der Initialisierung abgeschlossen.

Da beim Betrieb der Steuerung zwischen den Objekten 10 bis 21 die unterschiedlichsten Daten möglichst schnell ausgetauscht werden müssen, können die Kommunikationskanäle unterschiedlich, den Anforderungen angepasst realisiert sein. Beispielsweise kann ein Kommunikationskanal zwischen zwei Modulen 18 bis 21 desselben Threads 14 bis 17 in Form eines für beide Module 18 bis 21 gemeinsamen Speichers realisiert werden, über den Daten ausgetauscht werden; ein Kommunikationskanal 31 zwischen Modulen 18 bis 21 in verschiedenen Prozessen 11 bis 13 muss Daten von einem Adressraum in einen anderen übertragen können.

Es besteht die Möglichkeit weitere Initialisierungsschritte durchzuführen, die prinzipiell identisch zu den bisher beschriebenen ablaufen. Es wird immer von den hierarchisch übergeordneten Objekten 10 bis 17 die Ausführung eines Programmteils zur Erzeugung einer bestimmten Funktion ausgelöst und anschließend gewartet, bis von allen untergeordneten Objekten 11 bis 21 eine Ausführungsmeldung empfangen wurde, bevor eine Ausführungsmeldung an ein übergeordnetes Objekt 10 bis 17 gesendet wird. Erst nachdem von der Applikation 10 die Ausführungsmeldungen aller zugeordneten Prozesse 11 bis 13 empfangen wurden, erfolgt der nächste Schritt der Initialisierung. Dadurch wird sichergestellt, dass die Initialisierung synchron erfolgt und alle Objekte 10 bis 21 zu einem bestimmten Zeitpunkt einen definierten Zustand einnehmen.

In diesen weiteren Initialisierungsschritten können beispielsweise Parameter an einzelne Objekte 10 bis 21 übergeben werden. Die prinzipielle Vorgehensweise erfolgt wie bereits für den vorhergehenden Initialisierungsschritt beschrieben.

Als letzter Initialisierungsschritt erfolgt das Starten der Applikation 10. Dabei wird jedem Objekt 10 bis 21 signalisiert, dass die Initialisierung abgeschlossen wurde und von nun an der reguläre Betrieb der Steuerung beginnt. Dadurch erkennt ein Objekt 10 bis 21, dass es die reguläre Bearbeitung von über die Kommunikationskanäle empfangenen Daten durchführen soll. Bei diesem letzten Schritt ist keine Ausführungsmeldung zum übergeordneten Objekt 10 bis 17 mehr zwingend erforderlich, da die korrekte Initialisierung bereits durch die vorhergehenden Ausführungsmeldungen signalisiert wurde und die zur Initialisierung erforderliche Synchronität nicht mehr benötigt wird.

Ein einfaches Beispiel für eine Initialisierung ist in Fig. 2 dargestellt. Dabei wird zunächst das Ladeprogramm zum Laden des Startprogramms ausgeführt, so dass sich das Startprogramm im Arbeitsspeicher 4 befindet. Falls die Daten nicht bereits im Startprogramm enthalten sind, wird anschließend durch das Startprogramm eine Datei geladen, die Informationen über die programmtechnische Struktur der gesamten Applikation 10 und über eine oder mehrere Dateien beinhaltet, in der die gesamte Applikation 10 auf dem Massenspeicher 1 abgelegt ist und die alle Daten für die gesamte zu initialisierende Applikation 10 beinhaltet. Diese Information wird durch das Startprogramm derart benutzt, dass alle Dateien, die Informationen zur Applikation 10 beinhalten, in den Arbeitsspeicher 4 geladen werden und die Applikation 10 durch das Startprogramm erzeugt wird.

Der derart erzeugten Applikation 10 ist bekannt, dass die Prozesse 11, 12 und 13 der Applikation 10 zugeordnet sind. Daher werden durch die Applikation 10 die Prozesse 11, 12 und 13 in der Struktur erzeugt. Dies geschieht dadurch, dass die Applikation 10 mindestens eine ausführbare Datei in den Arbeitsspeicher 4 lädt, und die Ausführung dieser mindestens einen Datei startet. Dadurch werden alle Prozesse 11, 12 und 13 erzeugt.

Die neu erzeugten Prozesse 11, 12 und 13 beinhalten Informationen darüber, welche Threads 14 bis 17 dem jeweiligen Prozess 11, 12 und 13 zugeordnet sind, so dass die Erzeugung der Threads 14, 15, 16 und 17 durch die Prozesse 11 bis 13 veranlasst wird.

Die Threads 14 bis 17 beinhalten wiederum Informationen darüber, ob ihnen weitere Module 18 bis 21 zugeordnet sind. Dadurch werden die Module 18 bis 21 erzeugt. Die Module 18 bis 21 bilden die unterste Hierarchieebene der Steuerungssoftware für die Werkzeugmaschine, so dass sie keine weitere Information über zugeordnete Objekte beinhalten.

In jedem Objekt 10 bis 17 ist gespeichert, welche weiteren Objekte 11 bis 21 ihm zugeordnet sind, beispielsweise ist im Applikationsobjekt 10 gespeichert, dass ihm die Prozessobjekte 11, 12 und 13 zugeordnet sind, im Prozessobjekt 11 ist gespeichert, dass ihm die Threadobjekte 14 und 15 zugeordnet sind usw.. Weiterhin ist in jedem Objekt 11 bis 21 gespeichert, von welchem Objekt 10 bis 17 es erzeugt worden ist, das heißt in den beiden Threadobjekten 14 und 15 ist gespeichert, dass sie von dem Prozessobjekt 11 erzeugt worden sind. Ausnahmen bilden das Applikationsobjekt 10, in dem nicht gespeichert ist, von welchem Objekt es erzeugt worden ist, und die Modulobjekte 18 bis 21, denen keine weiteren Objekte zugeordnet sind.

Nachdem somit die gesamte Software der Steuerung synchronisiert erzeugt wurde, erfolgt noch eine Ausführungsmeldung durch die erzeugten Objekte 11 bis 21 an die Objekte 10 bis 17, die sie erzeugt haben, über ihre erfolgreiche Erzeugung. Dies beginnt mit den zuletzt erzeugten Modulobjekten 18 bis 21, die nach einer erfolgreichen Erzeugung an die ihnen übergeordneten Threadobjekte 14 bis 17, von denen sie erzeugt wurden, eine Ausführungsmeldung übertragen. Diese Ausführungsmeldung signalisiert jedem der Threadobjekte 14 bis 17 die erfolgreiche Erzeugung der von ihm erzeugten Modulobjekte 18 bis 21 und wird von diesem nur übertragen wenn die Erzeugung der Modulobjekte 18 bis 21 wirklich erfolgreich war.

Hat ein Threadobjekt 14 bis 17 die Ausführungsmeldung über die erfolgreiche Erzeugung aller ihm zugeordneten Modulobjekte 18 bis 21 empfangen und wurde auch selbst fehlerfrei erzeugt, sendet es ebenfalls eine Ausführungsmeldung, dass die Erzeugung erfolgreich abgeschlossen wurde an das Prozessobjekt 11 bis 13, das das Threadobjekt 14 bis 17 erzeugt hat. Das bedeutet, dass die Threadobjekte 14 und 15 die Ausführungsmeldung an das Prozessobjekt 11 senden, welches darauf bereits wartet. Sobald das Prozessobjekt 11 von den von ihm erzeugten Threadobjekten 14 und 15 eine abgeschlossene Erzeugung gemeldet wurde, meldet auch das Prozessobjekt 11 an das Applikationsobjekt 10 eine abgeschlossene Erzeugung. Ebenso meldet das Threadobjekt 17 eine abgeschlossene Erzeugung an das Prozessobjekt 13, das danach wiederum eine abgeschlossene Erzeugung an das Applikationsobjekt 10 meldet.

Nachdem dem Applikationsobjekt 10 durch alle von ihm erzeugten Prozessobjekte 11, 12 und 13 eine abgeschlossene Erzeugung der Struktur gemeldet wurde, steht die durch das Applikationsobjekt 10 realisierte Struktur in der Steuerung zur Verfügung. Der erste Schritt des synchronisierten Hochlaufs der Steuerung ist damit abgeschlossen

Kann ein Objekt nicht erzeugt werden, so dass eine Störung vorliegt, sendet dieses Objekt keine Rückmeldung, dass die Erzeugung erfolgreich abgeschlossen wurde. Das hierarchisch übergeordnete Objekt stellt nach einer gewissen Wartezeit fest, dass der Hochlauf nicht erfolgreich durchgeführt werden konnte und sendet ebenfalls keine Ausführungsmeldung an das ihm übergeordnete Objekt. Die entsprechende Funktion steht dann in der Applikation 10 nicht zur Verfügung. Aufgrund der in den jeweils übergeordneten Objekten nicht empfangenen Ausführungsmeldung kann ermittelt werden, an welcher Stelle eine Erzeugung nicht möglich war.

Es folgt in einem zweiten Schritt nun die Initialisierung der Kommunikationskanäle 30, 31 zwischen den Objekten 10 bis 21, die nach der gleichen Systematik wie die Erzeugung der Struktur 10 bis 21 der Software abläuft. Es werden dabei für das Applikationsobjekt 10 und jedes Prozess-, Thread- und Modulobjekt 11 bis 21 zumindest logische Kommunikationskanäle 30, 31 definiert, über die es mit bereits erzeugten Objekten kommunizieren kann. Dabei kann ein Kommunikationskanal 30, 31 auch wieder als ein Objekt angesehen werden. Zur Erzeugung der Kommunikationskanäle 30, 31 ist bereits in dem Applikationsobjekt, den Prozess-, Thread- und Modulobjekten 10 bis 21 gespeichert, mit welchen weiteren Objekten Nachrichten auszutauschen sind. Zu diesen Objekten werden dann Kommunikationskanäle 30, 31 erzeugt.

Nachdem die Struktur 10 bis 21 und die Kommunikationskanäle 30, 31 synchronisiert erzeugt wurden, erfolgt die synchronisierte Initialisierung der Applikation 10 beispielsweise mit Startwerten oder einstellbaren Parametern. Dies erfolgt nach der gleichen Systematik, wie für den ersten Schritt bereits beschrieben.

Zum Abschluss des synchronisierten Hochlaufs wird allen Objekten 10 bis 21 der Übergang in den Normalbetrieb nach diesem Schema signalisiert. Auch dies erfolgt nach der gleichen, bereits oben beschriebenen Systematik.

Es ist für den Fachmann offensichtlich, dass die Aufteilung der Informationen auf eine oder mehrere Dateien beliebig erfolgen kann. Es besteht die Möglichkeit die benötigten Informationen in nur wenigen Dateien abzuspeichern. So kann beispielsweise das Startprogramm bereits weitgehende Informationen über die gesamte zu erzeugende Struktur beinhalten. Alternativ können auch viele kleinere Dateien vorgesehen werden, die jeweils nur einen kleinen Teil der benötigten Information für die Initialisierung beinhalten. Weiterhin können beim synchronisierten Hochlauf zusätzlich zur Erzeugung der Struktur, der Kommunikationskanäle, der Initialisierung und dem Übergang in den Normalbetrieb noch weitere Schritte durchlaufen werden, insbesondere abhängig von der durch die Applikation 10 zu steuernden Werkzeugmaschine.

Insgesamt lässt sich der beispielhaft beschriebene Hochlauf wie folgt zusammenfassen. Um eine einfache Wartbarkeit und Erweiterbarkeit sicherzustellen, weisen die Programme für numerische Steuerungen zunehmend eine objektorientierte Struktur auf. Dabei werden Applikationen 10, Prozesse 11 bis 13, Threads 14 bis 17 und Module 18 bis 21 jeweils durch ein Objekt 10 bis 21 repräsentiert.

Jedes Objekt 10 bis 21 nimmt daber nacheinander schrittweise eine Anzahl von definierten Zuständen, wie Objekt erzeugt, Objekt initialisiert, Hochlauf abgeschlossen an. Ausgehend vom Applikationsobjekt 10 werden zunächst die für die Applikation 10 erforderlichen Prozesse 11 bis 13 erzeugt, die hierarchisch weitere für den jeweiligen Prozess 11 bis 13 erforderliche Threads 14 bis 17 erzeugen und die Threads 14 bis 17 jeweils wiederum die erforderlichen Module 18 bis 21 erzeugen Dabei nimmt jedes Objekt 10 bis 21 einen definierten Zustand an wenn es selbst vollständig erzeugt ist und wenn alle von ihm erzeugten Objekte 11 bis 21 vollständig erzeugt sind und melden dies an das erzeugende Objekt 10 bis 17. Wenn diese Rückmeldung beim Applikationsobjekt 10 eintrifft, nimmt es denselben Zustand an und löst den nächsten Schritt des Hochlauts aus Dabei stößt jedes Objekt 10 bis 21 bei allen von ihm erzeugten Objekten 11 bis 21 die Aktion an und nimmt den nächsten definierten Zustand an, wenn es selbst die Aktion vollständig ausgeführt hat und wenn alle von ihm erzeugten Objekte 11 bis 21 die Aktion vollständig ausgeführt haben und meldet dies an das erzeugende Objekt 10 bis 17. Analog werden nacheinander schrittweise alle definierten Zustände durchlaufen, bis der Normalbetrieb erreicht und der Hochlauf abgeschlossen ist.

Vorteilhafterweise umfassen die einzelnen Schritte der Reihe nach die Erzeugung der Prozesse 11 bis 13, der Threads 14 bis 17 und der Module 18 bis 21, bis alle erforderlichen Objekte 11 bis 21 erzeugt sind, dann die Erzeugung der Kommunikationskanäle 30, 31 durch den jeweiligen Empfänger, das Öffnen der Kommunikationskanäle durch den Sender, die Parametrisierung der Module 18 bis 21 und den Übergang in den Normalbetrieb der numerischen Steuerung.

## Patentansprüche

1. Verfahren zum synchronisierten Hochlauf einer Applikation (10) einer numerischen Steuerung einer Werkzeugmaschine oder eines Roboters, bei welchem Verfahren mehrere Initialisierungsschritte mehrerer Objekte (11 bis 21) der Applikation (10) nacheinander durchgeführt werden, wobei der Applikation (10) mehrere erste Objekte (11 bis 13) hierarchisch untergeordnet sind und jedem der ersten Objekte (11 bis 13) hierarchisch jeweils zumindest ein zweites Objekt (14 bis 17) untergeordnet ist und jeweils ein weiterer Initialisierungsschritt zur Initialisierung der Objekte (11 bis 21) der Applikation (10) erst gestartet wird, wenn der vorhergehende Initialisierungsschritt in den Objekten (11 bis 21) der Applikation (10) ausgeführt ist, indem folgende Verfahrensschritte durchgeführt werden:
- die Applikation (10) veranlasst einen Initialisierungsschritt bei den ihr hierarchisch untergeordneten ersten Objekten (11 bis 13);
- die ersten Objekte (11 bis 13) veranlassen diesen Initialisierungsschritt bei den ihnen hierarchisch untergeordneten zweiten Objekten (14 bis 17);
- die zweiten Objekte (14 bis 17) senden nach eigener korrekter Durchführung des Initialisierungsschrittes eine Ausführungsmeldung an das ihm übergeordnete erste Objekt (11 bis 13);
- die ersten Objekte (11 bis 13) senden nach Erhalt der Ausführungsmeldung aller ihm untergeordneten zweiten Objekte (14 bis 17) und nach eigener korrekter Durchführung des Initialisierungsschrittes eine Ausführungsmeldung an die Applikation (10).

2. Verfahren nach Anspruch 1, **dadurch gekennzeichnet, dass** zunächst ein Startprogramm ausgeführt wird, das Informationen über die Applikation (10) und über die zeitliche Reihenfolge der einzelnen Initialisierungsschritte beinhaltet und das zumindest einen Teil der Daten der Applikation (10) von einem Massenspeicher (1) in einen Arbeitsspeicher (4) lädt.

3. Verfahren nach einem der Ansprüche 1 bis 2, **dadurch gekennzeichnet, dass** Maßnahmen, die während mindestens einer der Initialisierungsschritte durchzuführen sind und zur Initialisierung der Objekte dienen, in den jeweiligen Objekten (10 bis 21) gespeichert werden.

4. Verfahren nach einem der Ansprüche 1 bis 4, **dadurch gekennzeichnet, dass** jedem der zweiten Objekte (14 bis 17) ein weiteres Objekt (18 bis 21) hierarchisch untergeordnet ist und
- die zweiten Objekte (14 bis 17) den Initialisierungsschritt bei den ihnen untergeordneten weiteren Objekten (18 bis 21) veranlassen,
- die weiteren Objekte nach eigener korrekter Durchführung des Initialisierungsschrittes eine Ausführungsmeldung an das ihm übergeordnete zweite Objekt (14 bis 17) senden,
- die zweiten Objekte (14 bis 17) nach Erhalt der Ausführungsmeldung aller ihm untergeordneter weiteren Objekte (18 bis 21) und nach eigener korrekter Durchführung des Initialisierungsschrittes eine Ausführungsmeldung an das ihnen übergeordnete erste Objekt (11 bis 13) senden.

5. Verfahren nach Anspruch 4, **dadurch gekennzeichnet, dass** die ersten Objekte (11 bis 13) Prozesse der Applikation (10) sind und die zweiten Objekte (14 bis 17). Threads sind, wobei die Threads (14 bis 17) CPU-Zeit zur Verfügung stellen.

6. Verfahren nach Anspruch 5, **dadurch gekennzeichnet, dass** in den weiteren Objekten (18 bis 21) jeweils eine konkrete Funktion der numerischen Steuerung realisiert ist.

7. Verfahren nach einem der Ansprüche 1 bis 6, **dadurch gekennzeichnet, dass** in einem Initialisierungsschritt einzelne, im wesentlichen abgeschlossene Funktionen der Applikation (10) in Form von Objekten (10 bis 21) erzeugt werden.

8. Verfahren nach einem der Ansprüche 1 bis 7, **dadurch gekennzeichnet, dass** in einem Initialisierungsschritt Kommunikationskanäle (30, 31) zwischen Objekten (10 bis 21) der Applikation (10) erzeugt werden.

9. Verfahren nach einem der Ansprüche 1 bis 8, **dadurch gekennzeichnet, dass** in einem Initialisierungsschritt den Variablen in den einzelnen Objekten (10 bis 21) Parameter zugewiesen werden.

10. Verfahren nach einem der Ansprüche 1 bis 9, **dadurch gekennzeichnet, dass** in einem Initialisierungsschritt der reguläre Betrieb der Applikation (10) freigegeben wird.

## Claims

1. Method for the synchronised run-up of an application (10) of a numerical control of a machine tool or robot, in which method a plurality of initialising steps for a plurality of objects (11 to 21) of the application (10) is successively performed, a plurality of first objects being subordinate hierarchically to the application (10) and at least one second object (14 to 17) respectively being subordinated hierarchically to each of the first objects (11 to 13) and respectively one further initialising step for initialising the objects (11 to 21) of the application (10) being started only when the preceding initialising step has been executed in the objects (11 to 21) of the application (10), the following method steps being performed:
- the application (10) initiates an initialising step in the first objects (11 to 13) which are hierarchically subordinate to it;
- the first objects (11 to 13) initiate this initialising step in the second objects (14 to 17) which are hierarchically subordinate to them;
- the second objects (14 to 17) send an execution report to the first object (11 to 13) which is superordinate to it after their own correct execution of the initialising step;
- the first objects (11 to 13) send an execution report to the application (10) after receipt of the execution report of all second objects (14 to 17) which are subordinate to it and after their own correct execution of the initialising step.

2. Method according to claim 1, **characterised in that** initially a start programme is executed, which contains information regarding the application (10) and the chronological sequence of the individual initialising steps, and which loads at least a part of the data of the application (10) from a bulk storage (1) into a main memory (4).

3. Method according to one of the claims 1 to 2, **characterised in that** the measures which are to be executed during at least one of the initialising steps and serve for initialising the objects are stored in the respective objects (10 to 21).

4. Method according to one of claims 1 to 4, **characterised in that** a further object (18 to 21) is hierarchically subordinate to each of the second objects (14 to 17) and
- the second objects (14 to 17) initiate the initialising step in the further objects (18 to 21) which are subordinate to them,
- the further objects send an execution report to the second object (14 to 17) which is superordinate to it after their own correct execution of the initialising step;
- the second objects (14 to 17) send an execution report to the first object (11 to 13) which is superordinate to them after receipt of the execution report of all further objects (18 to 21) which are subordinate to it and after their own correct execution of the initialising step.

5. Method according to claim 4, **characterised in that** the first objects (11 to 13) are processes of the application (10) and the second objects (14 to 17) are threads, the threads (14 to 17) making CPU time available.

6. Method according to claim 5, **characterised in that** a concrete function of the numerical control is produced in the further objects (18 to 21) respectively.

7. Method according to one of the claims 1 to 6, **characterised in that**, in an initialising step, individual substantially completed functions of the application (10) are produced in the form of objects (10 to 21).

8. Method according to one of the claims 1 to 7, **characterised in that**, in an initialising step, communications channels (30, 31) are produced between objects (10 to 21) of the application (10).

9. Method according to one of the claims 1 to 8, **characterised in that**, in an initialising step, parameters are assigned to the variables in the individual objects (10 to 21).

10. Method according to one of the claims 1 to 9, **characterised in that**, in an initialising step, the regular operation of the application (10) is released.

## Revendications

1. Procédé de lancement synchronisé d'une application (10) d'une commande numérique d'une machine-outil ou d'un robot, dans lequel plusieurs étapes d'initialisation de plusieurs objets (11 à 21) de l'application sont exécutées successivement,plusieurs premiers objets (11 à 13) étant subordonnés hiérarchiquement à l'application (10) et au moins un deuxième objet (14 à 17) étant subordonné hiérarchiquement à chacun des premiers objets (11 à 13) et une étape d'initialisation supplémentaire pour l'initialisation des objets (11 à 21) de l'application (10) n'étant lancée que lorsque l'étape d'initialisation précédente dans les objets (11 à 21) de l'application (10) a été exécutée, procédé dans lequel les étapes de procédé suivantes sont exécutées:
- l'application (10) déclenche une étape d'initialisation dans les premiers objets (11 à 13) qui lui sont subordonnés hiérarchiquement;
- les premiers objets (11 à 13) déclenchent cette étape d'initialisation au dans les deuxièmes objets (14 à 17) qui leur sont subordonnés hiérarchiquement,
- les deuxièmes objets (14 à 17), après exécution correcte de l'étape d'initialisation à leur propre niveau envoient un message d'exécution au premier objet (11 à 13) qui leur est hiérarchiquement supérieur;
- les premiers objets (11 à 13), après réception des messages d'exécution de tous les deuxièmes objets (14 à 17) qui leur sont subordonnés et après exécution correcte de l'étape d'initialisation à leur propre niveau envoient un message d'exécution à l'application (10).

2. Procédé selon revendication 1, **caractérisé en ce qu'**on exécute en premier un programme de démarrage, qui contient des informations sur l'application (10) ainsi que sur la succession dans le temps des différentes étapes d'initialisation et qui charge au moins une partie des données de l'application (10) depuis une mémoire de masse (1) dans une mémoire de travail (4).

3. Procédé selon une des revendications 1 à 2, **caractérisé en ce que** des dispositions, qui doivent être exécutées pendant au moins une des étapes d'initialisation et servent à l'initialisation des objets, sont mémorisées dans les objets concernés (10 à 21).

4. Procédé selon une des revendications 1 à 4, **caractérisé en ce qu'**un objet supplémentaire (18 à 21) est subordonné hiérarchiquement à chacun des deuxièmes objets (14 à 17) et
- les deuxièmes objets (14 à 17) déclenchent l'étape d'initialisation dans les objets supplémentaires (18 à 21) qui leur sont subordonnés,
- les objets supplémentaires, après exécution correcte de l'étape d'initialisation à leur niveau, envoient un message d'exécution aux deuxièmes objets (14 à 17) qui leur sont hiérarchiquement supérieurs.
- les deuxièmes objets (14 à 17), après réception du message d'exécution de tous les objets supplémentaires (18 à 21) qui leur sont subordonnés et après exécution correcte de l'étape d'initialisation à leur propre niveau envoient un message d'exécution au premier objet. (11 à 13) hiérarchiquement supérieur.

5. Procédé selon la revendication 4, **caractérisé en ce que** les premiers objets (11 à 15) sont des tâches de l'application (10) et les deuxièmes objets (14 à 17) sont des tâches élémentaires, les tâches élémentaires (14 à 17) libérant du temps CPU.

6. Procédé selon la revendication 5, **caractérisé en ce qu'**une fonction concrète de la commande numérique est exécutée dans les objets supplémentaires (18 à 21).

7. Procédé selon une des revendications 1 à 6, **caractérisé en ce que**, dans une étape d'initialisation, différentes fonctions essentiellement terminées de l'application (10) sont générées sous la forme d'objets (10 à 21).

8. Procédé selon une des revendications 1 à 7, **caractérisé en ce que** dans une étape d'initialisation, des canaux de communication (30, 31) entre des objets (10 à 21) de l'application (10) sont générés.

9. Procédé selon une des revendications 1 à 8, **caractérisé en ce que** dans une étape d'initialisation, des paramètres sont attribués aux variables dans les différents objets (10 à 21).

10. Procédé selon une des revendications 1 à 9, **caractérisé en ce que** dans une étape d'initialisation, le fonctionnement régulier de l'application (10) est lancé.
